# EUROPEAN PATENT APPLICATION

(11) **EP 1 150 521 A1**
(43) Date of publication of application: **31.10.2001**
(21) Application number: 00401135.9
(22) Date of filing: 25.04.2000
(51) Int. Cl.: H04Q 7/24, H04L 29/06

(54) **Method for setting up a session between a host of a data network and a mobile terminal of a mobile network and device for performing such method**

(71) Applicant: ALCATEL, 75008 Paris (FR)
(72) Inventor: Nguyen, Tu-Anh, 1070 Brussels (BE); van Doorselaer, Bart, 9090 Melle (BE)
(74) Representative: Narmon, Gisèle

(57) **Abstract**

A method for setting up a session between a host (H) of a data network (IP) and a mobile terminal (T) of a mobile network (W) via a session gateway device (GW1) between said data network and said mobile network includes a first step of setting up a first session between said host (H) and said session gateway device (GW1) within said data network (IP) , followed by a second step of setting up a second session between said session gateway device (GW1) and said mobile terminal (T), whereby said first session includes a first subsession set up between said host (H) and a mobility server device (MSD) included in said data network (IP), and a second subsession set up between said mobility server device (MSD) and said session gateway device (GW1). A mobility server device for performing this method is described as well.

## Description

The present invention relates to a method for setting up a session between a host of a data network and a mobile terminal of a mobile network.

Such a method is already known in the art, for instance from voice-over-IP, hereafter abbreviated as VolP, applications, wherein first a voice session is made between the host terminal of the data network and a session gateway device between the data network and the mobile network, followed by the set-up of a speech session between this session gateway device and the mobile terminal. This speech session, which in VolP applications involves the set up of a connection between this session gateway device and the mobile terminal is further handled internally within the mobile network, using dedicated mobile protocols.

Handover between radio cells, which is necessary when the mobile terminal enters another region covered by another radio cell, is thereby traditionally performed within the mobile network itself and is not seen by the exterior network elements such as gateway devices. This however requires extensive signaling within the mobile network during the connection. Handover between session gateway devices, which is necessary when the mobile terminal enters another region covered by another session gateway device, in addition has to be performed outside the mobile network, since during the connection, the host in the data network has to change from one session gateway device to another one. This however requires extensive signaling between the mobile network and the session gateway devices, as well as between the session gateway devices and the host in the data network itself, during the connection.

It is therefore an object of the present invention to present a method for setting up of a session between a host of a data network, and a mobile terminal of a mobile network, which will allow possible handover situations which may occur during the connection, thus when the mobile terminal enters a new cell covered by another session gateway to the data network, to be handled very easily and smoothly, within the data communication network itself, and not within the mobile network. It is to be remarked that throughout this document the term "session" is to be understood as all kinds of Layer 7 sessions are to be understood, thus for instance speech sessions, hypertext transfer protocol, abbreviated with http, sessions, multimedia sessions, file transfer protocol, abbreviated with ftp, sessions and others.

According to the invention, this object is achieved due to the fact that said session between said host of said data network and said session gateway device includes two subsessions, as is described in the characterizing portion of the first claim.

In this way, a dedicated device for serving sessions to terminals in a mobile network, is introduced. This device , forming part of the data network, will be in charge of all mobile-related session matters such as handover. The mobile network as well as the session gateway devices are consequently relieved from this task.

Another characteristic feature of the present invention is described in claim 2.

Thereby, upon establishment of a session between a host of a data network and the mobile terminal in the mobile network, the session gateway device involved informs its neighbours about this session, by communicating the terminal's identifier'to these neighbours.

Similarly the session's identifier, which thus corresponds to the identifier of the end-to-end session between the host and the mobile terminal, has also to be communicated by the session gateway device involved, as is described in claim 3.

A further characteristic feature of the present invention is described in claim 4.

Thereby handover is solved by the fact that another session gateway device now sets up another session to the mobility server device, and that the original session gateway device, upon detecting that the quality of the second session to the mobile terminal is bad, terminates the original session with the mobile terminal, as stated in claim 5, and with the mobility server device, as stated in claim 6.

The present invention also relates to such a mobility server device which has the features as described in claims 7 to 10.

The above and other objects and features of the invention will become more apparent and the invention itself will be best understood by referring to the following description of an embodiment taken in conjunction with the accompanying drawings wherein:

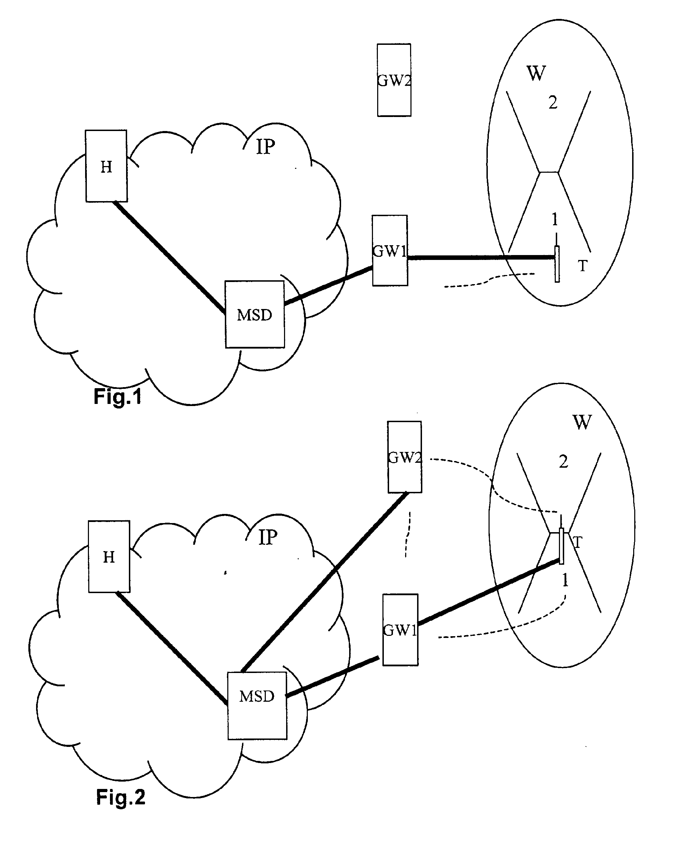

Figs. 1 to 3 schematically represent different steps involved in the handover process between a host H of a data network IP and a mobile terminal T of a mobile network W, via a mobility server device MSD, according to the present invention.

The subject method is used for establishing layer 7 sessions between a host, for instance a personal computer and denoted H in Figs. 1 to 3, of a data network such as the Internet, to a mobile terminal of a mobile network, such as the GSM network. Such layer 7 sessions can for instance be speech sessions, http, ftp and multimedia sessions. The data network is represented in Figs. 1 to 3 by the cloud IP, the mobile network by the ellipse W, and the mobile terminal is denoted T.

Both IP network and the mobile network are coupled to each other by means of session gateway devices which are adapted to perform the necessary session protocol conversions between both networks, in order to allow for a seamless transition from one network to the other. This session gateway device can be part of an existing gateway between the data and the mobile network such as for instance a device called a GGSN, which interfaces between the GPRS network constituting a mobile network, and the Internet constituting a data network as described in the specification GSM 03.60 version 6.2.0 Release 1997. However other mobile and data networks, and in between them other session gateway devices may be considered as well. The session gateway device can also be part of a Base-station itself of the traditional GSM network.

Because of the size of the mobile network, several session gateway devices are present. In Figs. 1 to 3 two of them are represented, denoted as GW1 and GW2, and reflect the case of session gateway devices for different geographical portions of the mobile network, each thus covered by a distinct session gateway device. Both portions are indicated by respective area numbers 1 and 2. These different geographical portions can thus range from radio cells, reflecting the case whereby each base station is equipped with such a session gateway device, to complete countries reflecting the case of session gateways incorporated in large gateways such as the GGSN.

It is to be noted that, in order not to overload the drawings, in all figures the permanent communications that are ongoing between the session gateway devices and other devices within the respective networks, are not shown, although these communications are continuously taking place, for instance for maintenance purposes. Only the connections and the associated communications with respect to the present invention are depicted in Figs. 1 to 3.

As is clear from Fig. 1, a situation is shown where the mobile terminal T is situated in area 1 which is covered by the first session gateway device GW1. The continuous radio link for locating terminal T, between T and the GW1, is schematically shown as a dashed curved line. Note that this link can consist of a sequence of many links between base stations, base station controllers and mobile switching centers, before finally the session gateway device is reached for the GGSN case. In the case of the session gateway device incorporated in the base station, it consists of one simple radio link. In order not to overload the drawings however these possible intermediate steps and devices are not shown. The host H of the data network, wanting to set up a session to this terminal T, thus has to access this first session gateway device, denoted GW1.

Instead of direct transfer of messages of a session establishment protocol such a H.323 for Voice-over-IP, as SIP (session initiation protocol) also for Voice-over-IP,... to GW1, by the Internet, these are now routed from the host H to a dedicated mobility server device, denoted MSD . How this routing occurs can be done in variant ways. One example thereby consists of the fact that an ID of a mobile terminal is always translated or linked, for instance in a directory, to the ID of this mobility server device.

Once these messages arrive at the mobility server device MSD, they are analysed : the mobility server extracts from it a session identifier of the end-to-end session between H and T, as well as the identifier of the mobile terminal T. From this identifier the mobility server device MSD can deduce the appropriate session gateway device GW1 to which this mobility terminal is currently linked via wired or radio links. This was possible since the session gateway devices, once they are in contact or lose this contact with a mobile terminal, always communicate this to for instance a location database, or even directly to the mobility server itself . In the first case, the mobility server first consults the location database in order to find the appropriate session gateway device for the mobile terminal under consideration.

Once this session gateway device GW1 is identified, the mobility server device MSD generates further messages of the same or of another session establishment protocol, for transmission to this session gateway device GW1. GW1 then returns appropriate messages of this protocol, until finally this further session between MSD and GW1 is established. At the same time, MSD also generates returning messages. Once both this first and this further session are established the mobility server device links them together thereby enabling data packets sent from the host to GW1 and pertaining to the first session, or data packets coming from GW1 and pertaining to this further session, to reach GW1, resp. the host H.

GW1, having received the messages for establishment of the further session from the MSD, is further adapted to extract from these messages an identifier of the mobile terminal T. GW1 will then further establish a second session with this terminal T such that data packets received from H via MSD are further forwarded to T, and that packets pertaining to this second session originating from T will finally reach H via MSD.

From the moment that the first session gateway device GW1 is involved in an end-to-end session between H and T, it will inform all its neighbouring session gateway devices, thus these session gateway devices covering neighbouring regions, of this session by communicating to them the terminal identifier, the end-to-end session identifier, and optionally the identifier of the second session between GW1 and T.

This communication between session gateway devices is schematically shown as the thin dashed line between GW1 and GW2.

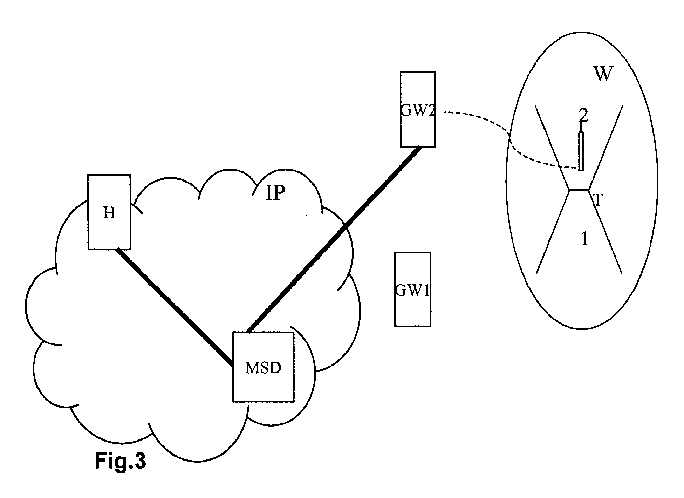

This is important for instance when the user of the mobile terminal T travels and enters the second region 2 covered by the second session gateway device GW2. Its presence is thereby detected by the second session gateway device. This is shown by the dashed curved line between T and GW2, indicating the radio link, which can thus consist of a single radio link or of a series of individual links between base stations, mobile switching centers and other devices, dependent on to which element of the mobile network the session gateway is associated. GW2, being aware of the fact that this specific terminal is involved in a session with the MSD in the IP network, will subsequently set up an additional session to the MSD, as is further depicted in Fig. 2 by the thick solid line between GW2 and MSD. At this moment both session gateway devices are further intensively communicating since one of them still has to take care of the mobile connection to the terminal T. In Fig. 2 the situation is depicted that GW1 still takes care of it. As soon as the terminal T is however mainly located within the second area, the second session gateway completely takes over, and the first session gateway terminates the two sessions : one with the MSD and one with T, as is shown in Fig. 3. At this moment the data packets are exchanged between H and T via MSD and GW2.

In another variant of the method, realized by another variant of the MSD, the latter is taking care of the handover. In this situation both GW1 and GW2 remain sending packets from T to MSD and vice versa. In this case it is the task of the MSD to discriminate to and from which of both session gateway devices the packets are to be sent, resp. received.

While the principles of the invention have been described above in connection with specific apparatus, it is to be clearly understood that this description is made only by way of example and not as a limitation on the scope of the invention, as defined in the appended claims.

## Claims

1. Method for setting up a session between a host (H) of a data network (IP) and a mobile terminal (T) of a mobile network (W) via a session gateway device (GW1) between said data network and said mobile network, said method including a first step of setting up a first session between said host (H) and said session gateway device (GW1) within said data network (IP), followed by a second step of setting up a second session between said session gateway device (GW1) and said mobile terminal (T),
**characterized in that**
said first session includes a first subsession being set up between said host (H) and a mobility server device (MSD) included in said data network (IP), and a second subsession being set up between said mobility server device (MSD) and said session gateway device (GW1).

2. Method according to claim 1,
**characterized in that**
said second step of setting up said second session is followed by a step of communicating, by said session gateway device (GW1), of an identifier of said mobile terminal (T), to all neighbouring session gateway devices (GW2) of said session gateway device (GW1).

3. Method according to claim 1
**characterized in that**
said second step of setting up said second session is followed by a step of communicating, by said session gateway device (GW1), of an identifier of said session, to all neighbouring session gateway devices of said session gateway device (GW1).

4. Method according to claim 2
**characterized in that**
in case a neighbouring session gateway device (GW2) of said neighbouring session gateway devices detects said mobile terminal (T) within its service area (2), said neighbouring session gateway device (GW2) sets up a third subsession within said data network to said mobility server device (MSD), and said neighbouring session gateway device (GW2) sets up another session within said mobile network with said mobile terminal (T).

5. Method according to claim 1
**characterized in that**
upon detection, by said session gateway device (GW1), that the quality of said second session between said session gateway device (GW1) and said mobile terminal (T) is no longer of a predetermined quality level, said session gateway device (GW1) terminates said second session with said mobile terminal.

6. Method according to claim 5
**characterized in that**
said session gateway device (GW1) further terminates said second subsession with said mobility server device (MSD).

7. Mobility server device (MSD) of a data network (IP), said mobility server device being adapted to receive from a host (H) of said data network (IP), messages of a session establishment protocol within said data network (IP), said mobility server device (MSD) being further adapted to generate returning messages of said session establishment protocol, thereby participating at setting up a first session to said host (H), said mobility server device (MSD) further being adapted to determine from said messages a session gateway device (GW1) to a mobile network (W) and to set up a further session to said session gateway device (GW1).

8. Mobility server device (MSD) according to claim 7
**characterised in that**
said mobility server device is further adapted to link said first session and said further session.

9. Mobility server device (MSD) according to claim 7
**characterised in that**
said mobility server device (MSD) is further adapted to route data packets from said host (H) to said session gateway device (GW1) upon establishment of said first session and of said further session.

10. Mobility server device (MSD) according to claim 7
**characterised in that**
said mobility server device (MSD) is further adapted to route data packets from said session gateway device to said host, upon establishment of said first session and of said further session.
